Europäisches Patentamt

European Patent Office

Office européen des brevets

(11) Veröffentlichungsnummer: **0 507 982 A1**

# EUROPÄISCHE PATENTANMELDUNG

(21) Anmeldenummer: **91109724.4**

(22) Anmeldetag: **13.06.91**

(51) Int. Cl.5: **B65G 60/00**, B65G 59/06

(30) Priorität: **09.04.91 DE 4111497**

(43) Veröffentlichungstag der Anmeldung:
**14.10.92 Patentblatt 92/42**

(84) Benannte Vertragsstaaten:
**AT BE CH DE DK ES FR GB IT LI LU NL SE**

(71) Anmelder: **Schuster, Helmut**
**Menhoferstrasse 29**
**W-8911 Denklingen(DE)**

(72) Erfinder: **Schuster, Helmut**
**Menhoferstrasse 29**
**W-8911 Denklingen(DE)**

(74) Vertreter: **Kahler, Kurt, Dipl.-Ing.**
**Patentanwälte Kahler, Käck & Fiener**
**Maximilianstrasse 57 Postfach 12 49**
**W-8948 Mindelheim(DE)**

(54) **Stapelvorrichtung für Paletten.**

(57) Die Erfindung betrifft eine Stapelvorrichtung zum Auf- und Abstapeln von auf einer Fördereinrichtung zugeführten Paletten, die gekennzeichnet ist durch eine im Querschnitt U-förmige Hubeinrichtung (6), die aus einem horizontal verlaufenden Bodenelement (8) sowie zwei senkrecht verlaufenden Seitenelementen (9, 10) besteht und die zwischen den beiden Seitenelementen (9, 10) die Fördereinrichtung (1) aufnimmt, eine an der Fördereinrichtung (1) befestigte Führungseinrichtung (7), die die Hubeinrichtung (6) vertikal bewegbar abstützt, eine Antriebseinrichtung (27) zum Auf- und Abbewegen der U-förmigen Hubeinrichtung (6) und wenigstens zwei im oberen Innenrandbereich jedes Seitenelements im Abstand vorgesehene Zapfen (11, 12), die quer zur Transportrichtung verschiebbar gelagert und in entsprechende Öffnungen an der Längsseite der zugeführten Palette einführbar sind. Die Stapelvorrichtung kann an jeder beliebigen Stelle der Fördereinrichtung ohne Probleme installiert werden.

FIG. 2

EP 0 507 982 A1

Die Erfindung betrifft eine Stapelvorrichtung gemäß dem Oberbegriff des Patentanspruches 1.

Es sind Stapelvorrichtungen zum Auf- und Abstapeln von Paletten bekannt, die in der Regel als separate Einheiten an den Enden eines Transportbandes oder dergleichen angeordnet werden. Außerdem ist es möglich, eine derartige Stapelvorrichtung in den Lauf der Fördereinrichtung einzubeziehen, wodurch jedoch das Förderband unterbrochen werden muß.

Ist es aufgrund eines anderen Werkstückflusses nach der Erstinstallation der Anlage erforderlich, die Stapelvorrichtung an einer anderen Stelle des Transportbandes anzuordnen, so erfordert dies erhebliche Änderungen, da beispielsweise an der betreffenden Stelle das Transportband unterbrochen werden muß.

Es ist somit Aufgabe der Erfindung, die Stapelvorrichtung der im Oberbegriff des Patentanspruches 1 beschriebenen Art derart weiterzubilden, daß diese an jeder Stelle des Transportbandes installiert werden kann, ohne daß dazu Änderungen am Transportband selbst erforderlich sind.

Diese Aufgabe wird erfindungsgemäß durch eine Stapelvorrichtung gelöst, die eine im Querschnitt U-förmige Hubeinrichtung, die aus einem horizontal verlaufenden Bodenelement sowie zwei senkrecht verlaufenden Seitenelementen besteht und zwischen den beiden Seitenelementen die Fördereinrichtung aufnimmt, eine an der Fördereinrichtung befestigte Führungseinrichtung, die die Hubeinrichtung vertikal bewegbar abstützt, eine Antriebseinrichtung zum Aufund Abbewegen der U-förmigen Hubeinrichtung und wenigstens zwei im oberen Innenrandbereich jedes Seitenelements im Abstand vorgesehene Zapfen, die quer zur Transportrichtung verschiebbar gelagert und in entsprechende Öffnungen an der Längsseite der zugeführten Palette einführbar sind, aufweist.

Da die Hubeinrichtung einen U-förmigen Querschnitt aufweist, kann diese das Förderband zwischen sich aufnehmen, ohne daß dabei am Förderband selbst Änderungen erforderlich werden. Außerdem befinden sich die Bauelemente der Hubeinrichtung unterhalb bzw. seitlich von den zu stapelnden Paletten, so daß die Stapelhöhe nach oben praktisch unbegrenzt ist. Ferner ist durch den U-förmigen Aufbau der Hubeinrichtung die für ihren Anbau an die Fördereinrichtung erforderliche zusätzliche Breite sehr gering. Außerdem ist das Gewicht des anzuhebenden Palettenstapels unproblematisch, da die Gesamtkonstruktion der Stapelvorrichtung außer einer stärkeren Dimensionierung der Bauteile ansonsten beibehalten werden kann.

Vorteilhafte Ausgestaltungen der Erfindung sind Gegenstand der Unteransprüche 2 bis 12.

Da gemäß Anspruch 8 der am Schieberteil des Zapfens vorgesehene Ansatz eine schiefe Ebene aufweist, kann die Längsbewegung der zugeordneten Kolbenstange des Zylinders oder einer anderen ähnlich wirkenden Antriebseinrichtung in eine Querbewegung umgewandelt werden, so daß die in bezug auf die Breite der Transporteinrichtung zusätzlich erforderliche Breite daher weiter verringert werden kann, indem der Zylinder bzw. die Antriebseinrichtung flach auf die Außenseite der Seitenwand der Hubeinrichtung montiert werden kann.

Die Erfindung wird nachstehend anhand der Zeichnung näher erläutert. Es zeigen:

Fig. 1    eine Prinzipskizze, die die Stapelvorrichtung in montiertem Zustand verdeutlicht;

Fig. 2    die Stapelvorrichtung in Vorderansicht;

Fig. 3    die Stapelvorrichtung in Seitenansicht;

Fig. 4    die Stapelvorrichtung in Draufsicht;

Fig. 5    einen Antriebsmechanismus für den Bolzen der Hubeinrichtung; und

Fig. 6    die Trägerplatte der Führungseinrichtung in Draufsicht.

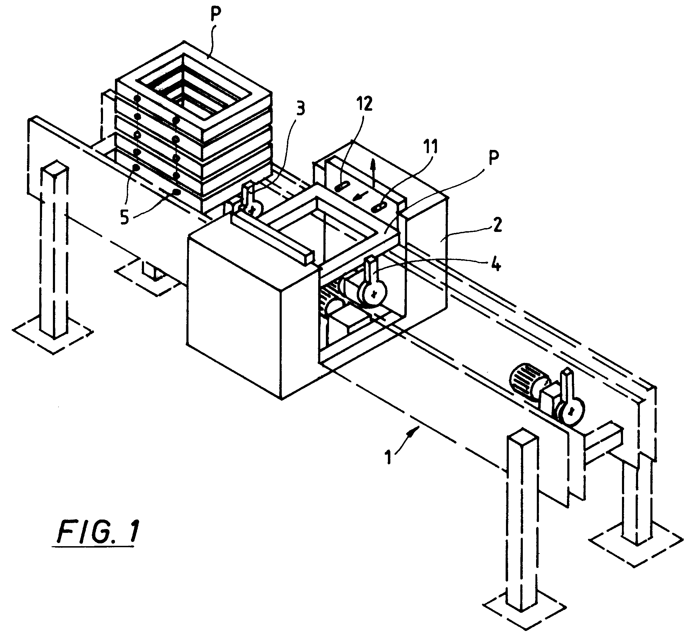

In Fig. 1 ist ein Teil einer Fördereinrichtung 1 dargestellt, an dem eine Stapelvorrichtung 2 montiert ist. Ein von der linken Seite her zugeführter Palettenstapel wird mit Hilfe eines ersten Stoppers 3 vor der Stapelvorrichtung 2 angehalten, bis der bereits von der Stapelvorrichtung 2 aufgenommene Palettenstapel abgearbeitet, d. h. in Form einzelner Paletten P nach Entfernen eines zweiten Stoppers 4 nach rechts befördert ist. Jede Palette ist zu beiden Seiten mit Öffnungen 5 versehen, in die Zapfen 11, 12 der Stapelvorrichtung 2 eingreifen können. Zum Vereinzeln der Paletten des Palettenstapels greifen die Zapfen 11, 12 in die Öffnungen 5 der zweiten Palette und heben damit den Palettenstapel unter Zurücklassen der unmittelbar auf der Fördereinrichtung 1 aufliegenden ersten Palette an, woraufhin durch Entfernen des zweiten Stoppers 4 diese nach rechts allein weitertransportiert werden kann. Anschließend wird der angehobene Stapel wieder auf das Transportband der Fördereinrichtung 1 abgesetzt, worauf die Zapfen 11, 12 aus den Öffnungen 5 der nunmehr untersten Palette herausgezogen und nach Anheben der Stapelvorrichtung 2 in die Öffnungen 5 der darüberliegenden Palette eingeführt werden. Anschließend wiederholt sich der oben geschilderte Vorgang.

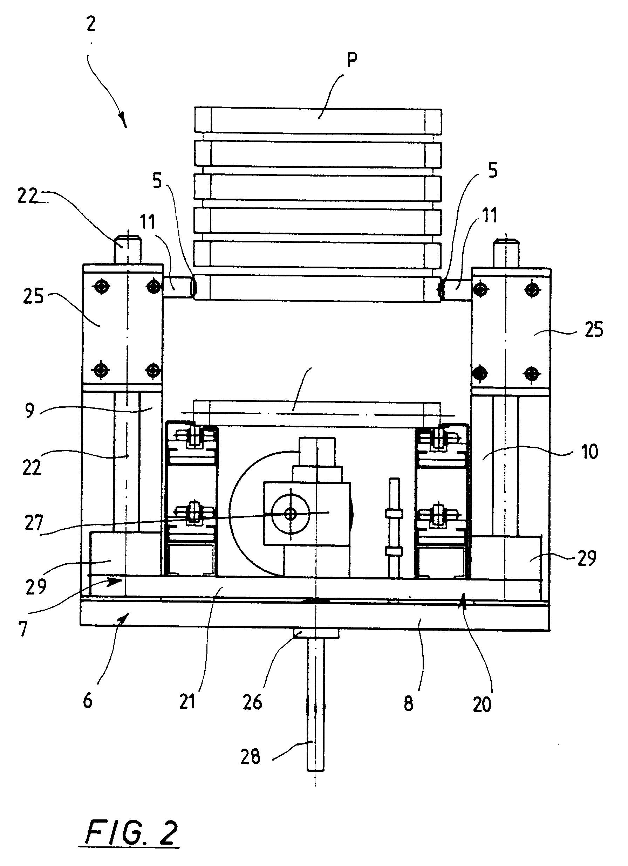

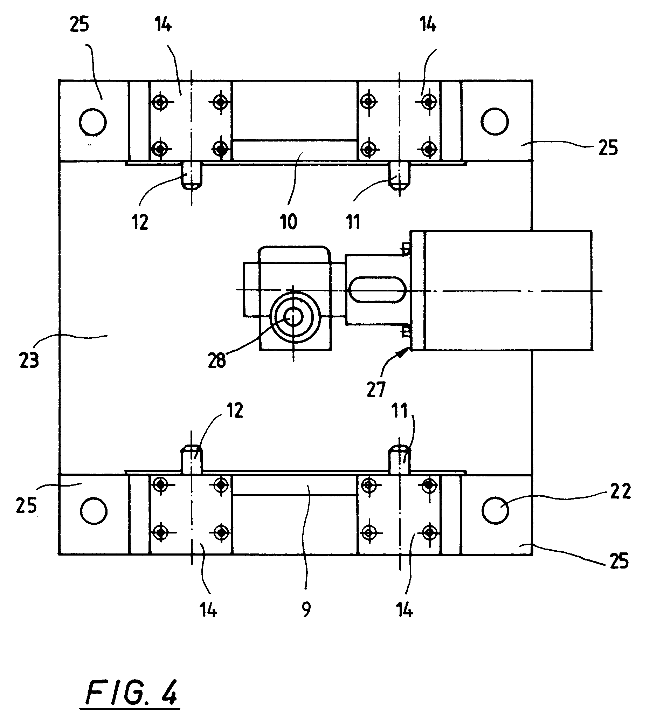

Wie aus Fig. 2 ersichtlich, besteht die Stapelvorrichtung 2 aus zwei wesentlichen Bestandteilen, nämlich einer U-förmig ausgebildeten Hubeinrichtung 6 sowie einer an feststehenden Basisteilen der Fördereinrichtung 1 befestigten Führungseinrichtung 7, die die Hubeinrichtung 6 vertikal bewegbar abstützt. Die Hubeinrichtung 6 weist ein horizontal verlaufendes Bodenelement 8 sowie zwei an den beiden Längskanten des Bodenelements 8 befestigte, senkrecht nach oben verlaufende Seitenelemente 9 und 10 auf. Wie aus Fig. 4 ersichtlich, sind am oberen Innenrandbereich jedes der beiden Seitenelemente 9 und 10 wenigstens Zwei Zapfen 11, 12 quer zur Transportrichtung verschiebbar gelagert.

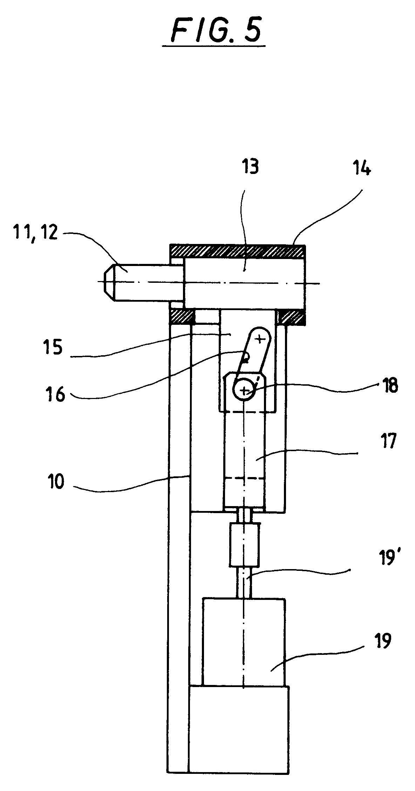

Wie aus Fig. 5 ersichtlich, weist jeder Zapfen 11, 12 an der der Fördereinrichtung 1 abgewandten Seite ein Schieberteil 13 auf, das in ein an der Rückseite des betreffenden Seitenelements 9 bzw. 10 vorgesehenes Führungsgehäuse verschiebbar eingesetzt ist. An der Unterseite des Schieberteils ist ein plattenförmiger Fortsatz 15 befestigt, der eine zur Bewegungsrichtung des Zapfens 11 schräg verlaufende Nut 16 aufweist. Dieser Fortsatz 15 ist in den oberen Aufnahmeteil eines Gabelbockes 17 aufgenommen, wobei in dem oberen Bereich des Gabelbockes ein Bolzen 18 vorgesehen ist, der die Führungsnut durchsetzt. Das Basisteil dieses Gabelbockes 17 steht mit einer an dem Seitenelement 10 befestigten Antriebseinrichtung, wie z. B. der Kolbenstange eines pneumatischen oder hydraulischen Zylinders 19 oder einer ähnlich wirkenden elektrischen Einrichtung in Verbindung.

Wird demzufolge die Kolbenstange ausgefahren, so bewegt sich der im Gabelbock 17 befestigte Zapfen 18 senkrecht nach oben. Bei dieser Bewegung wird über diesen Bolzen auf die schräge Fläche der Nut 16 eine Kraft ausgeübt, die eine Querbewegung des Schieberteils in Richtung zur Fördereinrichtung hervorruft. Infolge dieser Bewegungsumlenkung kann der Zylinder 19 flach auf der Außenseite des Seitenelements befestigt werden, so daß die Gesamtbreite der Stapelvorrichtung gering gehalten werden kann.

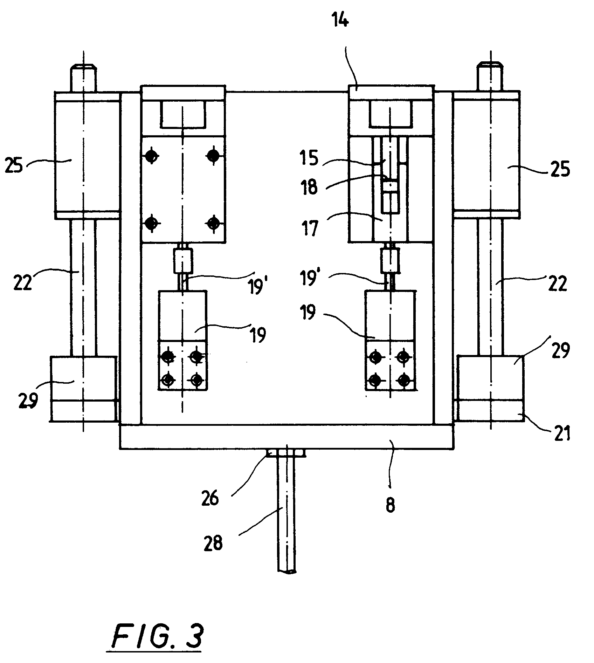

An den beiden Seiten jedes Seitenelements 9, 10 der Hubeinrichtung 6 sind im oberen Bereich eine Durchgangsbohrung aufweisende Gleitelemente 25 befestigt, wie dies aus Fig. 3 deutlich ersichtlich ist.

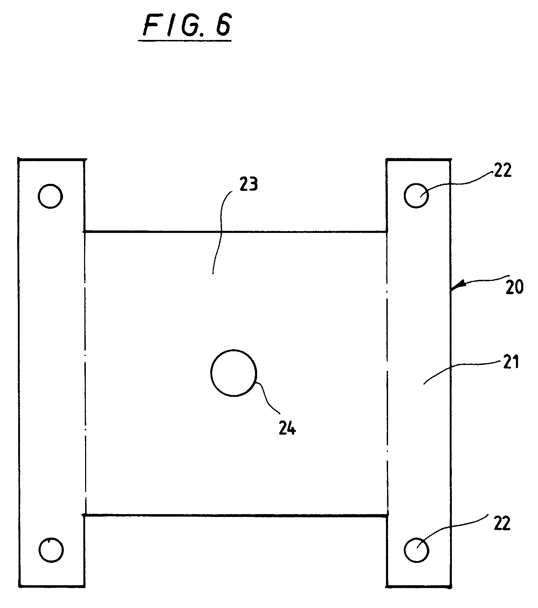

Die vorstehend beschriebene Hubeinrichtung 6 ist, wie eingangs erwähnt, an einer Führungseinrichtung 7 vertikal beweglich gelagert. Diese Führungseinrichtung 7 besteht, wie aus Fig. 2 und 6 ersichtlich, aus zwei im Abstand angeordneten U-förmigen Trägern 20, die jeweils einen quer zur Fördereinrichtung 1 verlaufenden, an der Unterseite des Basisteils der Fördereinrichtung 1 befestigten Hauptträger 21 und zwei an den Enden des Hauptträgers 21 über Klötze 29 befestigte, vertikal nach oben verlaufende Führungsstangen 22 auf, wobei die beiden Enden des Hauptträgers 21 die Breite der Fördereinrichtung 1 überragen.

Um eine gute Versteifung der beiden im Abstand angeordneten U-förmigen Träger 20 zueinander zu erzielen, können diese Teil einer den Abstand überbrückenden, an der Unterseite der Fördereinrichtung 1 befestigten Trägerplatte 23 sein (Fig. 6). Der Abstand der beiden Hauptträger 21 in Längsrichtung entspricht dabei dem Abstand der am Seitenelement 9 bzw. 10 jeweils befestigten beiden Gleitelemente 25, so daß die nach oben ragenden Führungsstangen 22 der Führungseinrichtung 7 in die Durchgangsbohrungen der entsprechenden Gleitelemente 25 der Hubeinrichtung 6 eingeführt werden können. Auf diese Weise wird die Hubeinrichtung 6 vertikal beweglich gelagert. Um eine Auf- bzw. Abbewegung der Hubeinrichtung 6 zu ermöglichen, ist in der Mitte des Bodenelements der Hubeinrichtung 6 eine Öffnung vorgesehen, in der eine Spindelmutter 26 festgelegt ist. Diese Spindelmutter 26 steht in Schraubeingriff mit der Spindel eines Spindelhubgetriebes 27, das z. B. auf der Oberseite der Trägerplatte 23 befestigt ist, wobei die Spindel 28 eine in der Trägerplatte 23 vorgesehene Öffnung 24 durchsetzt. Durch entsprechende Steuerung des Spindelhubgetriebes kann die jeweils gewünschte Hubhöhe erreicht werden. Anstelle des Spindelhubgetriebes 27 kann jedoch auch eine pneumatische, hydraulische oder ähnliche Antriebseinrichtung Verwendung finden.

Damit die Zapfen 11, 12 leicht in die betreffenden Öffnungen 5 der Palette eingeführt werden können, weisen diese am vorderen Ende eine konische Anphasung auf, wie dies aus Fig. 5 ersichtlich ist.

**Patentansprüche**

1. Stapelvorrichtung zum Auf- und Abstapeln von auf einer Fördereinrichtung zugeführten Paletten,
   **gekennzeichnet** durch
   - eine im Querschnitt U-förmige Hubeinrichtung (6), die aus einem horizontal verlaufenden Bodenelement (8) sowie zwei senkrecht verlaufenden Seitenelementen (9, 10) besteht und die zwischen den beiden Seitenelementen (9, 10) die Fördereinrichtung (1) aufnimmt,
   - eine an der Fördereinrichtung (1) befestigte Führungseinrichtung (7), die die Hubeinrichtung (6) vertikal bewegbar abstützt,
   - eine Antriebseinrichtung (27) zum Auf- und Abbewegen der U-förmigen Hubeinrichtung (6) und
   - wenigstens zwei im oberen Innenrandbereich jedes Seitenelements im Abstand vorgesehene Zapfen (11, 12), die quer zur Transportrichtung verschiebbar gelagert und in entsprechende Öffnungen an der Längsseite der zugeführten Palette einführbar sind.

2. Stapelvorrichtung nach Anspruch 1,
   dadurch **gekennzeichnet,**
   daß an den beiden Seiten jedes Seitenelements (9, 10) der Hubeinrichtung (6) im oberen Bereich jeweils ein eine Durchgangsbohrung aufweisendes Gleitelement (25) befestigt ist.

3. Stapelvorrichtung nach Anspruch 1 oder 2,
   dadurch **gekennzeichnet,**
   daß die Führungseinrichtung (7) aus zwei im Abstand angeordneten U-förmigen Trägern (20) besteht, die jeweils einen quer zur Fördereinrichtung verlaufenden, an der Unterseite der Fördereinrichtung (1) befestigten Hauptträger (21) und zwei an den Enden des Hauptträgers (21) befestigte vertikal nach oben verlaufende Führungsstangen (22) aufweisen, wobei die beiden Enden des Hauptträgers die Breite der Fördereinrichtung (1) überragen.

4. Stapelvorrichtung nach Anspruch 3,
   dadurch **gekennzeichnet,**
   daß die beiden Hauptträger (21) Teil einer Trägerplatte (23) sind, deren Breite dem lichten Abstand der beiden Seitenelemente (9, 10) der Hubeinrichtung (6) entspricht.

5. Stapelvorrichtung nach einem der Ansprüche 3 oder 4,
   dadurch **gekennzeichnet,**
   daß der Abstand der beiden Hauptträger (21) in Längsrichtung dem Abstand der am Seitenelement (9, 10) jeweils befestigten Gleitelemente (25) entspricht, so daß die nach oben ragenden Führungsstangen (22) der U-förmigen Träger (20) in die entsprechenden Durchgangsbohrungen der Gleitelemente (25) einführbar sind.

6. Stapelvorrichtung nach einem der vorhergehenden Ansprüche,
   dadurch **gekennzeichnet,**
   daß die Antriebseinrichtung (27) als Spindelhubgetriebe ausgebildet ist und daß in der Mitte des Bodenelements (8) der Hubeinrichtung (6) eine Öffnung vorgesehen ist, in der eine Spindelmutter (26) festgelegt ist, die in Schraubeingriff mit der Spindel (28) des Spindelhubgetriebes (27) zum Heben oder Senken der Hubeinrichtung (6) steht.

7. Stapelvorrichtung nach einem der Ansprüche 4 bis 6,
   dadurch **gekennzeichnet,**
   daß das Spindelhubgetriebe (27) über die Trägerplatte (23) an der Fördereinrichtung festgelegt ist.

8. Stapelvorrichtung nach einem der vorhergehenden Ansprüche,
   dadurch **gekennzeichnet,**

- daß jeder Zapfen (11, 12) an der der Fördereinrichtung (1) abgewandten Seite ein Schieberteil (13) aufweist, das in ein an der Rückseite des betreffenden Seitenelements befestigtes Führungsgehäuse (14) quer zur Längsrichtung der Fördereinrichtung verschiebbar eingesetzt ist,
- daß das Schieberteil (13) des Zapfens mit einem nach unten ragenden Fortsatz (15) versehen ist, der ein schräg verlaufendes Langloch (16) aufweist, durch das ein Bolzen (18) eines Gabelbockes (17) hindurchgeführt ist, und
- daß das Basisteil des Gabelbockes (17) mit der Kolbenstange (19') eines an der Rückseite des Seitenelements (9, 10) befestigten Zylinders (19) gekoppelt ist.

9. Stapelvorrichtung nach einem der Ansprüche 3 bis 7,
   dadurch **gekennzeichnet,**
   daß die unteren Enden der Führungsstangen (22) über einen Klotz (29) am Hauptträger (21) befestigt sind.

10. Stapelvorrichtung nach einem der vorhergehenden Ansprüche,
    dadurch **gekennzeichnet,**
    daß die Fördereinrichtung (1) ein auf Stützen gelagertes Transportband ist.

11. Stapelvorrichtung nach Anspruch 10,
    dadurch **gekennzeichnet,**
    daß das Transportband (1) ein Stauband ist.

12. Stapelvorrichtung nach einem der vorhergehenden Ansprüche,
    dadurch **gekennzeichnet,**
    daß längs der Fördereinrichtung ein erster Stopper (3) zum Anhalten des Palettenstapels vor der Stapelvorrichtung (2) sowie ein zweiter Stopper (4) zum Anhalten der Palette an einer Stelle vorgesehen sind, an der die Zapfen (11, 12) der Hubeinrichtung (6) den Öffnungen an der Seite der Palette (5) gegenüberliegen.

FIG. 1

**FIG. 2**

*FIG. 3*

_FIG. 4_

# FIG. 5

# FIG. 6

Europäisches
Patentamt

**EUROPÄISCHER RECHERCHENBERICHT**

Nummer der Anmeldung

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| | **EINSCHLÄGIGE DOKUMENTE** | | EP 91109724.4 |
| A | DD - A - 243 482 (TECHNISCHE UNIVERSITÄT DRESDEN, DIREKTORAL FORSCHUNG) * Gesamt * | 1 | B 65 G 60/00 B 65 G 59/06 |
| A | DE - B - 1 192 111 (KUMAG A.G.) * Gesamt * | 1 | |
| A | US - A - 4 352 617 (SAKAI et al.) * Gesamt * | 1 | |

RECHERCHIERTE
SACHGEBIETE (Int. Cl⁵)

B 65 G

Der vorliegende Recherchenbericht wurde für alle Patentansprüche erstellt.

| Recherchenort | Abschlußdatum der Recherche | Prüfer |
|---|---|---|
| WIEN | 29-05-1992 | PISSENBERGER |